# EUROPÄISCHE PATENTANMELDUNG

(11) **EP 1 371 468 A1**
(43) Veröffentlichungstag der Anmeldung: **17.12.2003**
(21) Anmeldenummer: 03013293.0
(22) Anmeldetag: 13.06.2003
(51) Int. Cl.: B29B 15/12

(54) **Verfahren und Vorrichtung zum Durchtränken eines flächigen Trägermaterials mit einer Flüssigkeit**

(30) Priorität: 14.06.2002 DE 10226504
(71) Anmelder: Ludwig Schleicher GmbH, Maschinenbau, Industrie- und Anlagenbau, 92690 Pressath (DE)
(72) Erfinder: Schleicher, Ludwig, D-92690 Pressath (DE)
(74) Vertreter: LOUIS- PÖHLAU- LOHRENTZ

(57) **Zusammenfassung**

Es wird ein Verfahren und eine Vorrichtung zum Durchtränken eines flächigen Trägermaterials (12) mit einer Flüssigkeit beschrieben, wobei auf Trommeln verzichtet wird und ein automatisch durchzuführendes Verfahren mit hoher Produktivität realisierbar ist. Das wird dadurch erreicht, daß das mit Flüssigkeit zu tränkende flächige Trägermaterial (12) aufeinanderfolgend zuerst zu einer ersten Zylinderhülse (34) und danach zu einer im entgegengesetzten Wickelsinn geformten zweiten Zylinderhülse (36) geformt wird, wobei die erste Zylinderhülse (34) mittels einer ersten Auftrageinrichtung (40) an ihrer Innenoberfläche (38) partiell mit der Flüssigkeit getränkt wird und wobei dann mit Hilfe einer zweiten Auftrageinrichtung (41) die von der Außenoberfläche (42) der ersten Zylinderhülse (34) gebildete Innenoberfläche (44) der zweiten Zylinderhülse (36) mit Flüssigkeit getränkt wird, so daß das flächige Trägermaterial (12) mit der Flüssigkeit durchtränkt wird.

## Beschreibung

Die Erfindung betrifft ein Verfahren und eine Vorrichtung zum Durchtränken eines flächigen Trägermaterials, bei dem es sich um ein Vlies, ein Gewebe o.dgl. handelt, mit einer Flüssigkeit, bei der es sich insbesondere um ein flüssiges Kunstharz handeln kann.

Ein solches Verfahren und eine derartige Vorrichtung sind aus der DE 94 18 842 U1 bekannt. Dort wird das flächige Trägermaterial passend zugeschnitten und in eine Trommel derartig eingelegt, daß die Längskanten des Trägermaterials in der Trommel stumpf zusammenstoßen. Das Trägermaterial bedeckt dann die Innenmantelfläche der Trommel vollständig. Das Einlegen des flächigen Trägematerials in die Trommel bedingt jedoch einen erheblichen Personal- und Zeitaufwand, was sich auf die Produktivität entsprechend auswirkt.

Aus der DE 195 22 808 C1 der Anmelderin ist ein Verfahren und eine Vorrichtung zum Durchtränken eines flächigen Trägermaterials mit einer Flüssigkeit bekannt, wobei das Einbringen des Trägermaterials in eine Trommel zeitsparend maschinell durchgeführt wird, so daß ein entsprechender Personalbedarf eliminiert und die Produktivität entsprechend verbessert ist. Das wird dadurch erreicht, daß das flächige Trägermaterial zuerst auf die Außenmantelfläche eines Zylinders aufgebracht und dort mittels einer Halteeinrichtung festgehalten wird, daß der Zylinder mit dem an ihm fixierten Trägermaterial dann in das Innere der Durchtränkungs-Trommel eingebracht wird und der Zylinder und die Trommel derart in Rotation versetzt werden, daß das flächige Trägermaterial fliehkraftbedingt von der Außenmantelfläche des Zylinders an die Innenmantelfläche der Trommel übergeben wird. Danach wird der Zylinder aus der Trommel herausbewegt und eine Auftrageinrichtung, mit der die Flüssigkeit auf das zu durchtränkende flächige Trägermaterial aufgebracht wird, in die Durchtränkungstrommel hineinbewegt. Auch hier kommt also eine Trommel zur Anwendung.

Bei der Verwendung von solchen Trommeln ist jedoch nicht zu vermeiden, daß ein Teil der das Trägermaterial durchtränkenden Flüssigkeit bis zur Innenoberfläche der Trommel gelangt, an der das flächige Trägermaterial fliehkraftbedingt anliegt. Diese Flüssigkeitsmenge führt zu einer Verschmutzung der Trommel, die nach der Durchführung des Durchtränkvorgangs beseitigt werden muß. Das bedingt ebenfalls einen nicht zu vernachlässigenden Zeitaufwand. Zur Vermeidung einer solchen Trommelverschmutzung schlägt die DE 195 29 557 A1 der Anmelderin vor, daß in der Trommel konzentrisch eine zentrale Lagertrommel austauschbar angeordnet ist, die auf der gleichen Seite offen ist wie die Trommel und die zur Aufnahme und faltenfreien Lagerung des mit einer Flüssigkeit zu durchtränkenden flächigen Trägermaterials vorgesehen ist. Durch die zentrale Lagertrommel wird eine Verschmutzung der Durchtränkungs-Trommel mit einfachen Mitteln vermieden. Die zentrale Lagertrommel ist zu Reinigungszwecken einfach und zeitsparend aus der Trommel entfernbar und durch eine neue bzw. geeinigte Lagertrommel ersetzbar. Die Lagertrommel kann hierbei eine flüssigkeitsdurchlässige Innentrommel und eine die Innentrommel umgebende Auffangtrommel für überschüssige Flüssigkeit aufweisen. Auch hier kommt also das Trommelprinzip zur Anwendung. Das Entfernen der zentralen Lagertrommel zu Reinigungszwecken bedingt ebenfalls einen Zeitaufwand, der die Produktivität beeinflußt .

Der Erfindung liegt die Aufgabe zugrunde, ein Verfahren und eine Vorrichtung zum Durchtränken eines flächigen Trägermaterials mit einer Flüssigkeit zu schaffen, wobei auf eine Trommel gänzlich verzichtet wird, und wobei mit einfachen Mitteln eine hochproduktive Durchtränkung des flächigen Trägermaterials mit einer Flüssigkeit möglich ist.

Diese Aufgabe wird verfahrensgemäß dadurch gelöst, daß das flächige Trägermaterial in einem ersten Windungsinn zu einer ersten Zylinderhülse gewunden wird, daß in die erste Trägermaterial-Zylinderhülse anschließend eine erste Auftrageinrichtung hineinbewegt wird, durch die gleichmäßig Flüssigkeit auf die Innenoberfläche der ersten Trägermaterial-Zylinderhülse aufgebracht und das Trägermaterial partiell getränkt wird, daß die erste Auftrageinrichtung dann aus der ersten Trägermaterial-Zylinderhülse herausbewegt und das flächige Trägermaterial in einem zum ersten Wickelsinn entgegengesetzten zweiten Wickelsinn zu einer zweiten Zylinderhülse gewunden wird, und daß in die zweite Zylinderhülse aus dem partiell getränkten Trägermaterial anschließend eine zweite Auftrageinrichtung hineinbewegt wird, durch die gleichmäßig Flüssigkeit auf die von der Außenoberfläche der ersten Trägermaterial-Zylinderhülse gebildeten Innenoberfläche der zweiten Trägermaterial-Zylinderhülse aufgebracht und das Trägermaterial vollständig durchtränkt wird.

Bei dem erfindungsgemäßen Verfahren kommt also keine Trommel zur Anwendung, an deren Innenmantelfläche das zu durchtränkende Trägermaterial angelegt würde, sondern es wird einfach das zu durchtränkende flächige Trägermaterial nacheinander, d.h. aufeinanderfolgend zu einer ersten und einer zweiten Zylinderhülse gewunden, d.h. geformt und mit Hilfe einer ersten und einer zweiten Auftrageinrichtung mit der Flüssigkeit getränkt. Dabei kann die erste und die zweite Auftrageinrichtung von voneinander verschiedenen Auftrageinrichtungen oder von ein und derselben Auftrageinrichtung gebildet sein. Eine Trommelreinigung entfällt also erfindungsgemäß, so daß die Produktivität entsprechend erhöht ist.

Als zweckmäßig hat es sich bei dem erfindungsgemäßen Verfahren erwiesen, wenn das flächige Trägermaterial an zwei sich gegenüberliegenden Rändern mittels flexiblen Halteeinrichtungen festgelegt wird, die flexiblen Halteeinrichtungen anschließend um erste Ringelemente gewunden werden, so daß das flächige Trägermaterial im ersten Wickelsinn die erste Zylinderhülse bildet, in die erste Zylinderhülse aus dem flexiblen Trägermaterial dann die erste Auftrageinrichtung hineinbewegt wird, um die Flüssigkeit gleichmäßig auf die Innenoberfläche der ersten Zylinderhülse aus dem flächigen Trägermaterial aufzubringen und das flächige Trägermaterial partiell mit der Flüssigkeit zu tränken, die flexible Halteeinrichtung dann von den ersten Ringelementen entfernt und im entgegengesetzten Wickelsinn um zweite Ringelemente gewunden wird, so daß das flächige Trägermaterial die zweite Zylinderhülse in einem zum ersten Wickelsinn entgegengesetzten zweiten Wickelsinn bildet, und wenn in die zweite Zylinderhülse aus dem flächigen Trägermaterial dann die zweite Auftrageinrichtung hineinbewegt wird, um die Flüssigkeit gleichmäßig auf die Innenoberfläche der zweiten Zylinderhülse aus dem flächigen Trägermaterial aufzubringen und das flächige Trägermaterial vollständig mit der Flüssigkeit zu tränken.

Die der Erfindung zugrundeliegende Aufgabe wird vorrichtungsgemäß dadurch gelöst, daß zwei sich gegenüberliegende flexible Halteeinrichtungen vorgesehen sind, zwischen welchen das flächige Trägermaterial eben einspannbar ist, daß ein Paar erste Ringelemente und ein Paar zweite Ringelemente vorgesehen sind, wobei die flexiblen Halteeinrichtungen um die ersten Ringelemente in einem ersten Wickelsinn zu ersten Ringen und wobei die flexiblen Halteeinrichtungen um die zweiten Ringelemente in einem zum ersten Wickelsinn entgegengesetzten zweiten Wickelsinn zu zweiten Ringen formbar sind, und daß den ersten Ringelementen eine erste Flüssigkeits-Auftrageinrichtung und den zweiten Ringelementen eine zweite Flüssigkeits-Auftrageinrichtung zugeordnet ist. Die ersten Ringelemente legen die erste Trägermaterial-Zylinderhülse fest und die zweiten Ringelemente bestimmen die zweite Trägermaterial-Zylinderhülse.

Als vorteilhaft hat es sich erwiesen, wenn die ersten und die zweiten Ringelemente an den voneinander abgewandten Seiten der flexiblen Halteeinrichtungen vorgesehen sind. Durch die beiden flexiblen Halteeinrichtungen wird ein Ebene bestimmt, von der die ersten und zweiten Ringelemente geringfügig beabstandet sind, wobei die ersten Ringelemente auf der einen Seite der besagten Ebene und die zweiten Ringelemente auf der gegenüberliegenden anderen Seite der besagten Ebene vorgesehen sind.

Die flexiblen Halteeinrichtungen weisen vorzugsweise elastische Streifenelemente auf, von welchen Klammerelemente jeweils in die gleiche Richtung wegstehen. Die elastischen Streifenelemente sind beispielsweise von Federblechstreifen gebildet. Die von den Streifenelementen wegstehenden Klammerelemente dienen zum Festhalten des mit einer Flüssigkeit zu durchtränkenden flächigen Trägermaterials. Die Klammerelemente des einen elastischen Streifenelementes sind also den Klammerelementen des davon beabstandeten zweiten elastischen Streifenelementes zugewandt.

Um die elastischen Streifenelemente der beiden flexiblen Halteeinrichtungen für das zu durchtränkende flächige Trägermaterial um die ersten und zweiten Ringelemente herumwinden zu können, ist es zweckmäßig, wenn die beiden voneinander entfernten Endabschnitte des jeweiligen elastischen Streifenelementes entlang zugehörigen ersten Linearführungen in einer ersten Raumrichtung und entlang zugehörigen zweiten Linearführungen in einer zur ersten Raumrichtung senkrechten zweiten Raumrichtung verstellbar sind. Dabei hat es sich als zweckmäßig erwiesen, wenn der jeweilige erste Endabschnitt des zugehörigen elastischen Streifenelementes an einem Befestigungselement angebracht ist, das entlang der zugehörigen ersten Linearführungen in der ersten Raumrichtung verstellbar ist, und wenn die entsprechende erste Linearführung entlang der zugehörigen zweiten Linearführung in der zweiten Raumrichtung verstellbar ist.

Die erste und die zweite Auftrageinrichtung können lanzenartig ausgebildet, zu den ersten und zweiten Ringelementen konzentrisch vorgesehen, in ihrer Längsrichtung verstellbar und rotativ antreibbar sein, um Flüssigkeit auf die Innenoberfläche der ersten Trägematerial-Zylinderhülse aufzubringen, die erste Trägermaterial-Zylinderhülse dann zur zweiten Trägermaterial-Zylinderhülse umzuformen und auf die von der Außenoberfläche der ersten Trägermaterial-Zylinderhülse gebildete Innenoberfläche der zweiten Trägermaterial-Zylinderhülse dann Flüssigkeit aufzubringen und auf diese Weise das Trägermaterial vollständig zu durchtränken.

Das erfindungsgemäße Verfahren und die erfindungsgemäße Vorrichtung ermöglichen also eine hochproduktive Durchtränkung flächigen Trägermaterials mit einer Flüssigkeit, bei der es sich insbesondere um ein flüssiges Kunstharz handelt. Das durchtränkte Trägermaterial, bei dem es sich um ein Vlies, ein Gewebe, ein Gewirk o.dgl. handelt, das z.B. mit flüssigem Kunstharz durchtränkt ist, kann beispielsweise in einer geeigneten Form unter Druck- und Temperatureinwirkung zu mindestens einem Formteil gepreßt werden. Derartig Formteile kommen beispielsweise in der Möbelindustrie oder in der Fahrzeugindustrie zum Auskleiden, zum Verkleiden usw. zum Einsatz. Das erfindungsgemäße Verfahren ist mit der erfindungsgemäßen Vorrichtung automatisch, d.h. ohne Bedienpersonal, ausführbar, was einen erheblichen Vorteil darstellt.

Weitere Einzelheiten, Merkmale und Vorteile ergeben sich aus der nachfolgenden Beschreibung wesentlicher Einzelheiten der erfindungsgemäßen Vorrichtung zur Durchführung des erfindungsgemäßen Verfahrens.

Es zeigen:
- Figur 1: eine Vorderansicht der Vorrichtung zum Durchtränken eines flächigen Trägermaterials mit einer Flüssigkeit, und
- Figur 2: eine Draufsicht auf die Vorrichtung gemäß Figur 1.

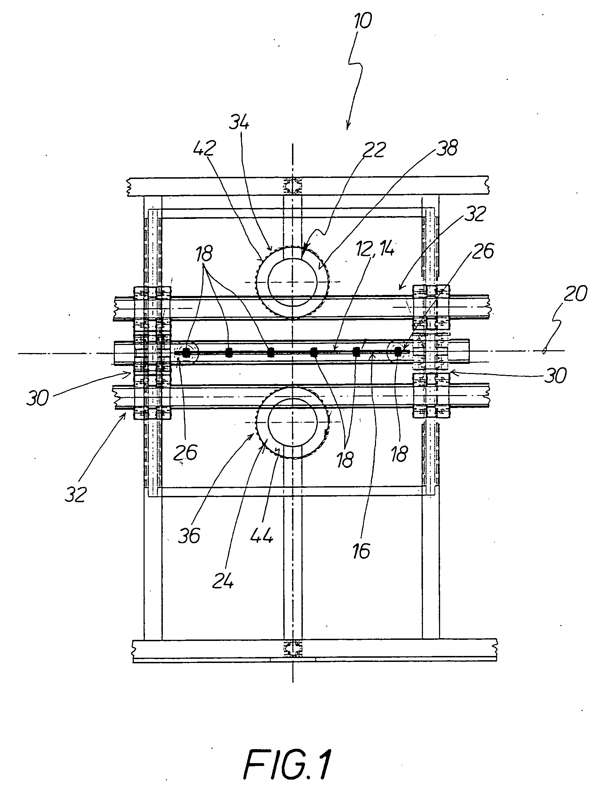

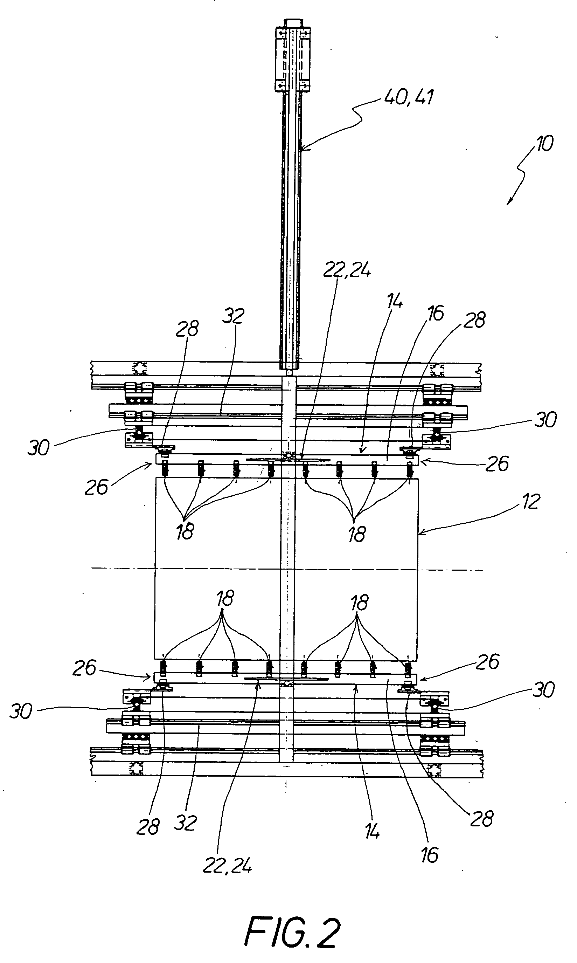

Die Figuren 1 und 2 zeigen eine Ausbildung der Vorrichtung 10 zum Durchtränken eines flächigen Trägermaterials 12 mit einer Flüssigkeit. Die Vorrichtung 10 weist zwei sich gegenüberliegende flexible Halteeinrichtungen 14 auf. Jede der beiden flexiblen Halteeinrichtungen 14 weist ein elastisches Streifenelement 16 auf, von dem Klammerelemente 18 in die gleiche Richtung wegstehen. Wie aus Figur 2 ersichtlich ist, sind die Klammerelemente 18 der einen flexiblen Halteeinrichtung 14 den Klammerelementen 18 der anderen flexiblen Halteeinrichtung 14 zugewandt. Das mit Flüssigkeit zu durchtränkende flächige Trägermaterial 12 wird durch die Klammerelemente 18 der beiden flexiblen Halteeinrichtungen 14 in einer Ebene festgelegt. Diese Ebene ist in Figur 1 durch die strichpunktierte Linie 20 bezeichnet. Die besagte Ebene 20 liegt in der Zeichnungsebene der Figur 2 und ist zur Zeichnungsebene der Figur 1 senkrecht orientiert.

Die Vorrichtung 10 weist erste Ringelemente 22 und zweite Ringelemente 24 auf, die den elastischen Streifenelementen 16 der flexiblen Halteeinrichtung 14 zugeordnet sind. Die ersten Ringelemente 22 befinden sich auf der einen Seite der Ebene 20 und die zweiten Ringelemente 24 befinden sich auf der gegenüberliegenden anderen Seite der Ebene 20, wie aus Figur 1 ersichtlich ist. Die ersten und die zweiten Ringelemente 22 und 24 sind von der Ebene 20 geringfügig beabstandet.

Jedes der beiden elastischen Streifenelemente 16 weist zwei voneinander entfernte Endabschnitte 26 auf, die mittels Befestigungselementen 28 an ersten Linearführungen 30 linear beweglich geführt sind. Die ersten Linearführungen 30 erstrecken sich in einer ersten Raumrichtung. Diese erste Raumrichtung ist zur Zeichnungsebene der Figur 2 senkrecht orientiert, sie liegt in der Zeichnungsebene der Figur 1. Die ersten Linearführungen 30 sind entlang zugehörigen zweiten Linearführungen 32 linear beweglich geführt. Die zweiten Linearführungen 32 erstrecken sich in einer zweiten Raumrichtung, die zur ersten Raumrichtung senkrecht orientiert ist. Die zweiten Linearführungen 32 liegen in der Zeichnungsebene der Figur 1 und in der Zeichnungsebene der Figur 2.

Mit Hilfe der ersten und der zweiten Linearführungen 30 und 32 ist es folglich möglich, die beiden elastischen Streifenelemente 16 um die ersten Ringelemente 22 und um die zweiten Ringelemente 24 zu winden. Werden die elastischen Streifenelemente 16 um die ersten Ringelemente 22 gewunden, so bildet das mittels der Klammerelemente 18 mit den elastischen Streifenelementen 16 verbundene flächige Trägermaterial 12 eine erste Trägermaterial-Zylinderhülse, die in Figur 1 durch die Bezugsziffer 34 angedeutet ist. Werden die elastischen Streifenelemente 16 um die zweiten Ringelemente 24 gewunden, so bildet das Trägermaterial eine zweite Trägermaterial-Zylinderhülse, die in Figur 1 mit der Bezugsziffer 36 angedeutet ist.

Bildet das flächige Trägermaterial die erste Trägermaterial-Zylinderhülse 34, so wird deren Innenoberfläche 38 mit Hilfe einer ersten Auftrageinrichtung 40 (sh. Figur 2), die zu den ersten Ringelementen 22 konzentrisch vorgesehen ist, partiell mit Flüssigkeit getränkt. Anschließend wird die erste Trägermaterial-Zylinderhülse 34 zur zweiten Trägermaterial-Zylinderhülse 36 umgeformt und mit Hilfe einer zweiten Auftrageinrichtung 42 (sh. Figur 2), die zu den zweiten Ringelementen 24 konzentrisch vorgesehen ist, die von der Außenoberfläche 42 der ersten Trägermaterial-Zylinderhülse 34 gebildete Innenoberfläche 44 der zweiten Trägermaterial-Zylinderhülse 36 mit Flüssigkeit getränkt, so daß das Trägermaterial 12 vollständig mit Flüssigkeit durchtränkt ist.

Die erfindungsgemäße Vorrichtung 10 erlaubt folglich -wie ohne weiteres klar wirdeine automatische Durchtränkung flächigen Trägermaterials 12 mit hoher Produktivität, weil keine Reinigungsarbeiten erforderlich sind, wie sie bei bekannten Verfahren und Vorrichtungen mit Trommeln notwendig sind.

## Patentansprüche

1. Verfahren zum Durchtränken eines flächigen Trägermaterials (12) mit einer Flüssigkeit,
**dadurch gekennzeichnet,**
**daß** das flächige Trägermaterial (12) in einem ersten Windungsinn zu einer ersten Zylinderhülse (34) gewunden wird, daß in die erste Zylinderhülse (34) anschließend eine erste Auftrageinrichtung (40) hineinbewegt wird, durch die gleichmäßig Flüssigkeit auf die Innenoberfläche (38) der ersten Trägermaterial-Zylinderhülse (34) aufgebracht und das Trägermaterial (12) partiell getränkt wird, daß die erste Auftrageinrichtung (40) dann aus der ersten Trägermaterial-Zylinderhülse (34) herausbewegt und das flächige Trägematerial (12) in einem zum ersten Wickelsinn entgegengesetzten zweiten Wickelsinn zu einer zweiten Zylinderhülse (36) gewunden wird, und daß in die zweite Zylinderhülse (36) aus dem partiell getränkten Trägermaterial (12) anschließend eine zweite Auftrageinrichtung (41) hineinbewegt wird, durch die gleichmäßig Flüssigkeit auf die von der Außenoberfläche (42) der ersten Zylinderhülse (34) gebildete Innenoberfläche (44) der zweiten Trägermaterial-Zylinderhülse (36) aufgebracht und das Trägermaterial (12) vollständig getränkt wird.

2. Verfahren nach Anspruch 1,
**dadurch gekennzeichnet,**
**daß** das flächige Trägermaterial (12) an zwei sich gegenüberliegenden Rändern mittels flexibler Halteeinrichtungen (14) festgelegt wird, daß die flexiblen Halteeinrichtungen (14) anschließend um erste Ringelemente (22) gewunden werden, so daß das flächige Trägermaterial (12) im ersten Wickelsinn die erste Zylinderhülse (34) bildet, daß in die erste Zylinderhülse (34) aus dem flexiblen Trägermaterial (12) die erste Auftrageinrichtung (40) hineinbewegt wird, um Flüssigkeit gleichmäßig auf die Innenoberfläche (38) der ersten Zylinderhülse (34) aus dem flexiblen Trägermaterial (12) aufzubringen und das flächige Trägermaterial (12) partiell mit der Flüssigkeit zu tränken, daß die flexiblen Halteeinrichtungen (14) dann von den ersten Ringelementen (22) entfernt und im entgegengesetzten Wickelsinn um zweite Ringelemente (24) gewunden werden, so daß das flächige Trägermaterial (12) die zweite Zylinderhülse (36) in einem zum ersten Wickelsinn entgegengesetzten zweiten Wickelsinn bildet, und daß in die zweite Zylinderhülse (36) aus dem flächigen Trägermaterial (12) dann die zweite Auftrageinrichtung (41) hineinbewegt wird, um Flüssigkeit gleichmäßig auf die Innenoberfläche (44) der zweiten Zylinderhülse (36) aus dem flächigen Trägermaterial (12) aufzubringen und das flächige Trägermaterial (12) vollständig mit der Flüssigkeit zu tränken.

3. Vorrichtung zum Durchtränken eines flächigen Trägermaterials (12) mit einer Flüssigkeit,
**dadurch gekennzeichnet,**
**daß** zwei sich gegenüberliegende flexible Halteeinrichtungen (14) vorgesehen sind, zwischen welchen das flächige Trägermaterial (12) eben einspannbar ist, daß ein Paar erste Ringelemente (22) und ein Paar zweite Ringelemente (24) vorgesehen sind, wobei die flexiblen Halteeinrichtungen (14) um die ersten Ringelemente (22) in einem ersten Wickelsinn zu ersten Ringen und wobei die flexiblen Halteeinrichtungen (14) um die zweiten Ringelemente (24) in einem zum ersten Wickelsinn entgegengesetzten zweiten Wickelsinn zu zweiten Ringen formbar sind, und daß den ersten Ringelementen (22) eine erste Flüssigkeit-Auftrageinrichtung (40) und den zweiten Ringelementen (24) eine zweite Flüssigkeit-Auftrageinrichtung (41) zugeordnet ist.

4. Vorrichtung nach Anspruch 3,
**dadurch gekennzeichnet,**
**daß** die ersten und die zweiten Ringelemente (22 und 24) an den voneinander abgewandten Seiten der flexiblen Halteeinrichtungen (14) vorgesehen sind.

5. Vorrichtung nach Anspruch 4,
**dadurch gekennzeichnet,**
**daß** die ersten und die zweiten Ringelemente (22 und 24) von den flexiblen Halteeinrichtungen (14) geringfügig beabstandet sind.

6. Vorrichtung nach Anspruch 3,
**dadurch gekennzeichnet,**
**daß** die flexiblen Halteeinrichtungen (14) elastische Streifenelemente (16) aufweisen, von welchen Klammerelemente (18) jeweils in die gleiche Richtung wegstehen.

7. Vorrichtung nach Anspruch 6,
**dadurch gekennzeichnet,**
**daß** die beiden voneinander entfernten Endabschnitte (26) des jeweiligen elastischen Streifenelementes (16) entlang zugehörigen ersten Linearführungen (30) in einer ersten Raumrichtung und entlang zugehörigen zweiten Linearführungen (32) in einer zur ersten Raumrichtung senkrechten zweiten Raumrichtung verstellbar sind.

8. Vorrichtung nach Anspruch 7,
**dadurch gekennzeichnet,**
**daß** der jeweilige Endabschnitt (26) des zugehörigen elastischen Streifenelementes (16) an einem Befestigungselement (28) angebracht ist, das entlang der zugehörigen ersten Linearführung (30) in der ersten Raumrichtung verstellbar ist, und daß die entsprechende erste Linearführung (30) entlang der zugehörigen zweiten Linearführung (32) in der zweiten Raumrichtung verstellbar ist.

9. Vorrichtung nach Anspruch 3,
**dadurch gekennzeichnet,**
**daß** die erste und die zweite Auftrageinrichtung (40 und 41) lanzenartig ausgebildet, zu den ersten und zweiten Ringelementen (22 und 24) konzentrisch vorgesehen, in ihrer Längsrichtung verstellbar und rotativ antreibbar sind.
